(19) Europäisches Patentamt

European Patent Office

Office européen des brevets

(11) Publication number: **0 335 682 B1**

# (12) EUROPEAN PATENT SPECIFICATION

(45) Date of publication of patent specification: **08.12.93**

(51) Int. Cl.5: **B65D 81/24**, B65D 81/26

(21) Application number: **89303097.3**

(22) Date of filing: **29.03.89**

(54) Water-permeable controlled atmosphere packaging device from cellophane and microporous film.

(30) Priority: **31.03.88 GB 8807795**
**16.11.88 US 272026**

(43) Date of publication of application:
**04.10.89 Bulletin 89/40**

(45) Publication of the grant of the patent:
**08.12.93 Bulletin 93/49**

(84) Designated Contracting States:
**BE CH DE ES FR GB IT LI LU NL SE**

(56) References cited:
EP-A- 0 299 845
WO-A-89/00892
FR-A- 1 386 309
FR-A- 1 567 996
US-A- 4 079 152

**PATENT ABSTRACTS OF JAPAN, vol. 4, no.
93 (C-17)[575], 5th July 1980;& JP-A-55 68 245
(TOPPAN INSATSU K.K.) 22-05-1980**

**FOOD TECHNOLOGY, vol. 42, no. 9, September 1988, pages 70-74,76,77, Chicago,Illinois,
US; D. ZAGORY et al.: "Modified atmosphere
packaging of freshproduce"**

(73) Proprietor: **HERCULES INCORPORATED**
**1313 N. Market Street**
**Hercules Plaza**
**Wilmington Delaware 19894(US)**

(72) Inventor: **Mitchell, Kelly Antoon, Jr.**
**2405 Dacia Drive**
**Lancashire**
**Wilmington Delaware 19810(US)**

(74) Representative: **De Minvielle-Devaux, Ian
Benedict Peter et al
CARPMAELS & RANSFORD
43, Bloomsbury Square
London WC1A 2RA (GB)**

EP 0 335 682 B1

**Description**

This invention relates to containers for the storage in a controlled atmosphere of fresh produce (fruit, vegetables, or flowers) that are constructed of substantially gas-impermeable walls having a gas-permeable panel that permits controlled flows of $CO_2$ and $O_2$ into and out of the container to enhance retention of freshness.

It is known that the rate of maturation of produce can be reduced, and freshness retained longer, by providing a biaxially oriented membrane panel of limited $CO_2$ and $O_2$ permeance in an otherwise substantially impermeable container, to controll the atmosphere surrounding the produce. If the permeability of the panel is appropriately adjusted with regard to the respiration rate and weight of the produce, the $O_2$ and $CO_2$ levels within the container can be made to equilibrate at levels much different from the normal atmospheric levels of 21 % of $O_2$ and 0.03% of $CO_2$, so that the proper $O_2$ concentration and relative concentrations of $CO_2$ and $O_2$ can be maintained.

It is also known that thermoplastic polymers can be filled with inert fillers, cast into sheets, and stretched to form an oriented microporous thermoplastic film that accurately provides the permeability desired for the panel. CAP containers have been produced, using for the panel a homopolymer, copolymer, or blend having an oxygen and carbon dioxide permeance between about 77,500 and 155,000,000 cc/m$^2$-day-atmosphere (5,000 and 10,000,000 cc/100 in$^2$-atm-day), the permeance and area of the film being such as to provide a flux of $O_2$ and $CO_2$ approximatelyequal to the predicted $O_2$ and $CO_2$ respiration rates for not more than 3.0 kg of the enclosed fruit, vegetable, or flower, and having an $O_2$ to $CO_2$ permeance ratio of about 1.

However some produce items, such as mushrooms and strawberries, liberate water vapor very rapidly by respiration or evaporation from the produce surface. When packaged by conventional controlled atmosphere packaging (CAP) technology, excessive amounts of moisture condenses on the surfaces of the produce and on the package, causing "waterlogging" in an excessively humid atmosphere and an objectionable slimy surface on produce such as mushrooms.

To absorb moisture as well as $CO_2$ from a CAP container, U.S. patent 4,079,152 discloses the use, in a pereable polypropylene container, of a packet formed from water-permeable uncoated cellophane film and containing a $CO_2$ absorber and a desiccant (such as calcium chloride, lithium chloride, ethylene glycol, silica gel, or calcium hydroxide). U.S. patent 3,795,749 discloses a plasticized polyvinyl chloride film for wrapping lettuce that permits $CO_2$ to escape freely from the package and allows some moisture to escape, but retains enough moisture in the package to prevent the lettuce from drying out.

U.S. patent 4,055,672 discloses a container for storage of meat comprising a gas-impermeable tray with a heat-sealed lid having an inner layer of oxygen-permeable film, which may be made of a microporous film or cellophane, and an adhesively-secured outer layer of a gas-impermeable polymeric film that is partially-removable at the display site to allow access of oxygen.

French Patent 1567996 (granted in 1969) relates to a package for the conservation of fruit and vegetables having gas impermeable walls and a window covered by a silicon elastomer membrane of a thickness between 50 and 100 micro metres and a free surface of 25 to 50%. The window having a surface of 0.1 to 0.25 square metres for every cubic metre of volume of the package. The silicon elastomer is preferably based on dimethyl polysiloxane. The package is applied essentially to apples and pears. In order to avoid condensation in the package, one should wait until the fruits are at the conservation temperature before closing the package. The atmosphere in the package equilibrates at a value determined by the storage temperature and the nature of the fruit. For example, in a package of apples stored at a temperature between 0 and 10 degrees, the atmosphere in the package equilibrates at about 92% nitrogen, 3% oxygen, 5% carbon dioxide, the atmosphere being saturated with water vapour, which is stated to permit protracted storage of the apples.

French Patent 1386309 (granted in 1964) relates to a package for perishable goods, especially mushrooms, consisting of a slightly porous cellophane bag protected by a net. The bag protects the goods from the ambient atmosphere which might pollute them, without completely preventing an exchange, especially of moisture. This is an improvement over earlier packages for mushrooms consisting of a cardboard or plastic container provided with a window covered by a sheet of ordinary cellophane, which is not satisfactory because of the condensation of water vapour on contact with the sheet of cellophane which causes the mushrooms to become black. It has been proposed to replace the sheet of cellophane by a net covering the window, but such a net when directly in contact with the mushrooms runs the risk of damaging them. It also allows free access to the air which permits pollution of the mushrooms and excessive dehydration thereof. On the contrary, the slightly porous cellophane envelope of the package of the invention "forms a sort of sponge around the mushrooms and allows just the necessary exchanges for the optimal conservation of their organoleptic properties".

None of the known containers provides a satisfactory solution to the problem of accurately controlling the moisture concentration in a container having a microporous gas-permeable panel and capable of maintaining within it the optimum $O_2$ concentration and relative concentrations of $CO_2$ and $O_2$ in the presence of respiring fresh fruit, vegetables, or flowers.

According to the invention, a container that is constructed of substantially gas-impermeable walls that have a microporous gas-permeable panel, for the storage in a controlled atmosphere of fresh produce, and that permits controlled flows of $CO_2$ and $O_2$ into and out of the container to enhance retention of freshness of the produce, is characterized in that the gas-permeable panel is of a microporous oriented film of polypropylene or of a blend of a propylene homopolymer and a propylene-ethylene copolymer having an ethylene moiety concentration of 2-5% by weight, the gas permeable panel having an oxygen and carbon dioxide permeance between 77,500 and 155,000,000 $cc/m^2$-day-atmosphere, the permeance and area of the film being such as to provide a flux of $O_2$ and $CO_2$ approximately equal to the predicted $O_2$ and $CO_2$ respiration rates for not more than 3.0 kg of enclosed produce, and having an $O_2$ to $CO_2$ permeance ratio of approximately 1, and the walls of the container also have a panel composed of cellophane that is permeable to moisture and substantially impermeable to the flow of $O_2$ and $CO_2$.

The sizes of the water-vapor permeable film and microporous film can vary depending on many factors such as the respiration rate of the produce, weight of produce, desired time to steady-state atmosphere, temperature, etc. Normally, each panel will be less than 64.5 $cm^2$ (10 $in^2$) in total size, preferably 6.54 to 64.5 $cm^2$ (1 to 10 $in^2$). If one material constitutes the lid, the area can be up to 645 $cm^2$ in total size, with an appropriate adjustment in the permeance level.

Preferably, the water-vapor permeance of the water-vapor-permeable panel is in the range of from about 31 to 465 $gm/m^2$-day (2 to 30 grams/100 $in^2$-day), measured at 10°C. when subjected to a driving force of about 100% relative humidity (RH) on one side of the film and about 50% relative humidity (RH) on the opposite side.

In particular, the size and permeance of the water-vapor permeable film, within the said ranges, is chosen with regard to the respiration rate so that the amount of excess moisture that is vented from the package is such as to prevent slimy or wet surfaces without inducing excessive drying out of the produce. Depending on the produce weight (up to about 3kg), the permeance, and the desired rate of removal of moisture vapor, the area of the cellophane, whether in the form of a small panel or a complete lid stock, preferably varies between 6.54 and 387 $cm^2$ (1 and 60 square inches).

The cellophane panel is preferably an uncoated grade of cellophane having the water-vapor transmission rate characteristics cited above. Examples of such uncoated cellophanes include the following cellophane products marketed by Flexel Company of Covington, Indiana: 128 PUT-76, 140 PUT-77, 150 PUT-76, 160 PUT-76, 130 PUT SD-2, 195 PUT SD-2, and 215 PUT-79. Unacceptable types of cellophane include coated or laminated cellophanes that do not have the cited water-vapor transmission rate characteristics because the coating or lamination presents a significant barrier to the transmission of water vapor.

The two films or panels may be separate, or may partially overlap so as to combine one film that primarily controls the $O_2$ and $CO_2$ levels in the package with a second film that primarily controls the $H_2O$ level. An example of a partially overlapping of the two films or panels is where the water-vapor-permeable film is used as a lid over an impermeable package and the $O_2$ and $CO_2$ permeable microporous film is glued over a cut-out opening in the surface of the lid stock; a vice versa arrangement is also possible. Alternatively, panels of equal size of the two materials, each having a hole cut out (in any desired shape or area), may be glued or otherwise laminated together so that in one cut-out area only the water-vapor permeable film remains and in the other cut-out area there is only microporous film as the container-wall area.

The permeance of the gas permeable panel is conventionally in the range of 77,500 and 155,000,000 $cc/m^2$-day-atmosphere as measured by a pressure driving force (PDF) permeance testing device. In any case, the permeance and size of the microporous panel are chosen according to well-known principles so as to create desirable steady-state $O_2$ and $CO_2$ levels, taking into account the film's permeance, the anticipated package temperature and produce weight, and the respiration characteristics of the produce to be packaged.

Fillers that can be used in the microporous films employed in this invention are conventionally inorganic and inert to the polymer, have a relatively low interfacial surface tension (making them practically noncohesive toward the polymer matrix), have an average particle size of about 0.3 to 14 microns, and are present in the amount of about 36 to 60 weight percent, preferably 40-55%, (on a volume basis 15-34% by volume, preferably 18-29% by volume) based on the total amount of polymer and filler present. The average particle size of the filler material is determined by a Coulter counter method or by microscopy.

Inert inorganic fillers that can be used in the microporous films employed in this invention include calcium carbonate, silica, diatomaceous earth, barium sulfate, titanium dioxide, and clays. Preferred fillers are calcium carbonate, silica, and barium sulfate.

An important conventional component of the composition of the microporous film is a processing aid such as calcium stearate, zinc stearate, oleic acid, and stearic acid; from about 0.1 to about 2.5% by weight (or 0.2-5% volume) of the calcium stearate is preferably used.

An antioxidant stabilizer is optional in the microporous film employed in the present invention. Examples of antioxidants that can be used in the present invention are tetrakis(methylene(3,5-di-t-butyl-4-hydroxyhydrocinnamate))methane (this antioxidant is marketed commercially under the trademark IRGANOX 1010), tris (2,4-di-t-butyl-phenyl)phosphite (marketed commercially under the trademark IRGAPHOS 168), dilaurylthio-dipropionate (this is a thioester), and N,N'-diphenyl-p-phenylenediamine (an aryl amine). Up to 0.50% by weight (or up to 2% by volume) may be used in the film.

A particularly useful uniaxially oriented membrane having the correct porosity characteristics for use as the CAP panel in the container of this invention as defined above is a microporous film based on a composition of 36-60% by weight of a polypropylene homopolymer or a propylene-ethylene copolymer, 36-60 weight percent of an inert filler having particle sizes of 0.3-14 microns, 0.1-2.5 weight percent of a processing aid selected from calcium stearate, zinc stearate, oleic acid, and stearic acid, and 0-0.5 weight percent of a stabilizer.

A particularly useful biaxially oriented membrane for use as the CAP panel is a blend of a propylene homoplymer and a propylene-ethylene copolymer having an ethylene-moiety concentration of 2 to 5 percent by weight, filled with 40 to 60% of a filler, such as calcium carbonate, based on the total weight of the film.

The microporous film composition used in this invention can be prepared by conventional blending techniques, and the polymeric ingredients may be mixed together in a first step and then the other ingredients added into the blend. Alternately, the entire blending operation can be performed in a single step.

EXAMPLES

The rating system used in the following Examples for evaluating storage efficiency, using mushrooms as one example of produce that can benefit from storage in the container according to the invention, is based on the following data set forth in TABLE A.

TABLE A
RATING FACTORS FOR MUSHROOM EVALUATIONS

| RATING POINTS | WHITENESS | DIRT | BRUISES | VEILS | STEM APPEARANCE | STEM GROWTH | MOISTURE | INTERNAL COLOR | OVERALL APPEARANCE |
|---|---|---|---|---|---|---|---|---|---|
| 5 | Perfectly White | None | None | Closed Tight | White—Clear | No Growth | Dry | White | Perfect |
| 4 | White | Very Little | Very Little | Closed but Stretched | Mostly White | Less Than 50% Increase | Damp | Off White | Very Good |
| 3 | Off White | Some | Some — Detract | Some Weak —Cracked | Outer Brown Inner White | 50% Increase | Damp – Wet | Beige-Tan, Very Light Brown | Average |
| 2 | Gray | Dirty Detract | Heavy — Cracked- | Some Open | Pitted Increase | 50% –100% | Wet | Tan-Gray, Some Brown | Unsatisfactory |
| 1 | Dark or Brown | Very Dirty | Extensive | Open | Brown | More Than 100% Increase | Slimy, Water-Logged | Brown | Poor |

EXAMPLE 1

An impermeable plastic tray containing 250 grams of mushrooms was sealed on the top surface by about 155 cm² (24 in²) of lid stock made of cellophane (150 PUT-76). For this cellophane, a water-vapor transmission rate of 170 g/m$^2$-day (11 g/100in$^2$-day) at 10°C. and 50% RH was measured; $O_2$ and $CO_2$ permeance were near zero. Over a 19 cm$^2$ (3 in$^2$) hole in the cellophane was glued a 26 cm$^2$ (4 in$^2$) panel of uniaxial $CaCO_3$- filled polypropylene CAP film (permeance = 5502500 cc/m$^2$-atm-day (355,000 cc/100 in$^2$-atm-day) by the PDF method). After 7 days of storage at 10°C., the package atmosphere equilibrated at the desired 11% of $O_2$ and 9% of $CO_2$. The mushroom surfaces were desirably dry and the package interior was free of water condensation. In contrast, substitution of water-vapor-impermeable PET film for the cellophane resulted in unacceptable water-logging and slimy surfaces of the mushrooms due to excess water condensation. The PET lid stock fogged up from the excess water vapor whereas the cellophane lid stock prevented the fogging.

EXAMPLE 2

Five identical samples of mushrooms of about 171 grams each (series #1) were taken from a refrigerator at a temperature of 4°C., and were placed in impermeable plastic (poly(vinyl chloride) (PVC)) trays at room temperature where each tray has the dimensions of 17.8 cm by 12.7 cm by 7.62 cm (7 in by 5 in by 3 in); the trays were sealed on the top by a lid made of the PVC with two holes side by side therein, each having an area of 12.9 cm$^2$ (2 in$^2$) available for permeation of gases. A panel of cellophane 150 put 76 (marketed by the Flexel Company) was glued over one of the holes in the lid and a panel of a uniaxially oriented polypropylene film filled with 44% of $CaCO_3$ was glued over the other hole. After the sealing of the trays, they were placed in the refrigerator at a temperature of 10°C. for about eleven days. Since the five samples of mushrooms were identical and were prepared identically, the conditions in each of the trays was identical. Hence, during the course of the eleven day storage period, one of the trays was evaluated at a set time over the eleven day period. When a particular tray was evaluated, an air tight chromatographic syringe was pierced into the tray and a sample of the atmospheric gases therein was withdrawn and analyzed on a gas chromatograph. In order to obtain the weight loss and organoleptic rating factors, the tray had to be completely opened and the mushrooms removed therefrom; in other words, the sample was destroyed for further testing and was removed from the experimental program.

The evaluation data is set forth infra in TABLE 1 for this first series of tests.

EP 0 335 682 B1

## TABLE 1

**SERIES #1: DUAL MEMBRANE CAP FILM SYSTEM**

**Components:**

(1) $12.9 cm^2 (2 in^2)$ uniaxial PP/44% $CaCO_3$ CAP film[a]
$O_2$ permeance $= 3332500 cc/m^2-atm-day (215,000 cc/100in^2-atm-day)$ (PDF method)

(2) $12.9 cm^2 (2 in^2)$ cellophane[c], Flexel 150 PUT-76
Water vapour transmission rate $= 170g/m^2-day (11g/100 in^2-day)$ @ 10°C. @ 50% driving force.

Experimental program: 10 days storage at 10°C.
Mushroom variety: U3 mushrooms from Phillips Mushroom Farms of Kennett Square, Pa.

| | INITIAL | A | B | C | D | E |
|---|---|---|---|---|---|---|
| Elapsed time, days | 0.00 | 1.92 | 4.83 | 6.75 | 9.00 | 10.76 |
| Temperature °C | 4-10 | 10 | 10 | 10 | 10 | 10 |
| Initial weight, grams | N/A | 171.1 | | 169.8 | 170.9 | 172.2 |
| Final weight, grams | N/A | 169.7 | | 165.9 | 162.0 | 161.2 |
| % weight loss | N/A | 1.40 | | 2.30 | 5.21 | 6.39 |
| $CO_2$ % | 0.0 | 13.4 | 14.2 | 13.4 | 15.3 | 20.0 |
| $O_2$ % | 21.0 | 9.7 | 8.6 | 8.9 | 7.6 | 3.1 |

TABLE 1 CONTINUED

|  | INITIAL | A | B | C | D | E |  |
| --- | --- | --- | --- | --- | --- | --- | --- |
| Organoleptic scores: |  |  |  |  |  |  | DELTA |
| Whiteness | 3 | 2.5 | 2 | 2.25 | 2 | 2 | -1 |
| Dirt | 3 | 3 | 3 | 3 | 3 | 3 | 0 |
| Bruises | 3 | 3 | 3 | 3 | 3 | 3 | 0 |
| Veils | 5 | 5 | 5 | 5 | 5 | 5 | 0 |
| Stem Appearance | 3 | 3 | 3 | 3 | 3 | 3 | 0 |
| Stem Growth | 5 | 5 | 5 | 5 | 5 | 5 | 0 |
| Internal Color | 3.3 | 3.3 | 3 | 2.5 | 2 | 1.8 | -1.5 |
| Moisture | 5 | 4.5 | 4 | 3.75 | 3.5 | 3.25 | -1.75 |
| Overall Appearance | 5 | 4 | 3.75 | 3.5 | 3 | 2.5 | -2.5 |
| TOTAL | 35.3 | 33.3 | 31.75 | 31 | 29.5 | 28.55 | -6.75 |

a - Composition:
   Pro-fax 6501 (polypropylene)    28.0 parts
   Pro-fax SA 841 (polypropylene)  28.0 parts
   Atomite (CaCo3)                 44.0 parts
   Calcium stearate                 0.560 parts
   B-225 (stabilizer)               0.252 parts
Processing:
   Uniaxial Orientation
   Forward draw 6.0 X
   Forward draw roll setting temperature = 115°C

c - Cellophane
   Type:  150 PUT-76 from Flexel Company of Indiana
   Uncoated grade
   Water vapour transmission rate = $170 g/m^2$-day
   (11 grams/100 $in^2$-day) at 10°C using 100% RH
   on one side of the film and 50% RH on the other
   side.

EP 0 335 682 B1

EP 0 335 682 B1

## TABLE 2

SERIES #2: SINGLE MEMBRANE CAPE FILM SYSTEM

Components: (1) $12.9cm^2(2 in^2)$ uniaxial PP/44% $CaCO_3$ CAP film $O_2$ permeance = $3332500cc/m^2$-atm-day(215,000 $cc/100in^2$-atm-day) (PDF method)

(2) NO cellophane

Experimental program: 10 days storage at 10°C
Mushroom variety: U3 mushrooms from Phillips Mushroom Farms of Kennett Square, Pa.

|  | INITIAL | A | B | C | D | E |  |
|---|---|---|---|---|---|---|---|
| Elapsed time, days | 0.00 | 1.92 | 4.83 | 6.75 | 9.00 | 10.76 |  |
| Temperature °C | 4–10 | 10 | 10 | 10 | 10 | 10 |  |
| Initial weight, grams | N/A | 172.5 | 170.0 | 170.5 | 169.4 | 170.6 |  |
| Final weight, grams | N/A | 171.2 | 167.2 | 163.5 | 163.0 | 166.2 |  |
| % Weight Loss | N/A | 0.75 | 1.65 | 4.11 | 3.78 | 2.58 |  |
| $CO_2$ % | 0.0 | 15.7 | 17.5 | 16.5 | 19.6 | 17.7 |  |
| $O_2$ % | 21.0 | 8.0 | 6.6 | 6.6 | 3.6 | 5.3 |  |
| Organoleptic scores: |  |  |  |  |  |  | DELTA |
| Whiteness | 3 | 2 | 2 | 1.75 | 2 | 1.75 | −1.25 |
| Dirt | 3 | 3 | 3 | 3 | 3 | 3 | 0 |
| Bruises | 3 | 3 | 3 | 3 | 3 | 3 | 0 |
| Veils | 5 | 5 | 5 | 5 | 5 | 5 | 0 |
| Stem Appearance | 3 | 3 | 3 | 3 | 3 | 3 | 0 |
| Stem Growth | 5 | 5 | 5 | 5 | 5 | 5 | 0 |
| Internal Color | 3.3 | 3.3 | 3 | 2.5 | 2.25 | 2 | −1.3 |
| Moisture | 5 | 3 | 2.5 | 5 | 1.75 | 1.25 | −3.75 |
| Overall Appearance | 5 | 3.5 | 3 | 2.5 | 2 | 2.25 | −2.75 |
| TOTAL | 35.3 | 30.8 | 29.5 | 30.75 | 27.0 | 26.25 | −9.05 |

**TABLE 3**

SERIES #3   OPEN CONTROL

Components: Package is open to free flow of atmospheric gases.

    (1) NO uniaxial film

    (2) NO cellophane

Experimental program: 10 days storage at 4-10°C

Mushroom variety: U3 mushrooms from Phillips Mushroom Farms of Kennett Square, Pa.

| | INITIAL | A | B | C | D | E | DELTA |
|---|---|---|---|---|---|---|---|
| Elapsed time, days | 0.00 | 1.92 | 4.83 | 6.75 | 9.00 | 10.76 | |
| Temperature °C | 4-10 | 4 | 4 | 4 | 10 | 10 | |
| Initial weight, grams | N/A | 175.0 | | 170.3 | 171.3 | 168.9 | |
| Final weight, grams | N/A | 170.0 | | 154.9 | 156.4 | 146.0 | |
| % Weight Loss | N/A | 2.86 | | 9.04 | 8.70 | 13.56 | |
| $CO_2$ % | 0.0 | 0.0 | 0.0 | 0.0 | 0.0 | 0.0 | |
| $O_2$ % | 20.9 | 20.9 | 20.9 | 20.9 | 20.9 | 20.9 | |
| Organoleptic scores: | | | | | | | |
| Whiteness | 3 | 1.5 | 1.5 | 1.25 | 1 | 0.75 | -2.25 |
| Dirt | 3 | 3 | 3 | 3 | 3 | 3 | 0 |
| Bruises | 3 | 3 | 3 | 3 | 3 | 3 | 0 |
| Veils | 5 | 4 | 3 | 2 | 1 | 1 | -4 |
| Stem Appearance | 3 | 3 | 5 | 3 | 3 | 3 | 0 |
| Stem Growth | 5 | 5 | 3 | 2.5 | 2 | 2 | -3 |
| Internal Color | 3.3 | 3.3 | 4.5 | 2.5 | 2.25 | 2 | -1.3 |
| Moisture | 5 | 5 | 3.5 | 4 | 4 | 3.5 | -1.5 |
| Overall Appearance | 5 | 4 | 3 | 3 | 2.5 | 2 | -3 |
| TOTAL | 35.3 | 31.8 | 29.5 | 24.25 | 21.75 | 20.25 | -15.05 |

For the sake of comparison, two other series of tests were run similar to series #1 described supra except that in the second series only one hole was in the lid having the area 2 square inches where a piece of the uniaxially oriented polypropylene film was glued. In other words, no cellophane was used. The data is set forth in Table 2 supra. A third series of tests used no CAP film or cellophane but merely had the mushrooms opened to the atmosphere in the refrigerator; the data is set forth in Table 3 supra.

Table 1 summarizes the organoleptic data (9 rating factors) for mushrooms stored for 10 + days at 10°C in a PVC clamshell package with a "dual membrane" of cellophane and microporous uniaxial film forming a portion of the package surface. The organoleptic rating factors are defined in Table A. The calculated "delta" number in Table 1 represents the final minus initial ratings for each type of organoleptic rating factor. Since a rating of 5 is best and a rating of 1 is worst, a negative delta number indicates a worsening of that particular rating factor during the storage time. For example, in Table 1, the moisture delta after 10.76 days is -1.75. The total delta for all rating factors is -6.75. The following data will show that these delta numbers represent a substantial improvement in mushroom quality versus packaging with microporous film alone or with simple "open" packaging.

Note that the atmospheric composition, weight loss, and organoleptic rating factors are evaluated several times during the test period. In each series several packages of mushrooms are studied concurrently because whenever a package of mushrooms is evaluated, the package must be opened and removed from the experimental program.

In Table 2, the mushrooms are packaged in a similar manner, but the cellophane humidity-venting panel and the corresponding hole are absent. Note that the delta value for moisture after 10.76 days is -3.75, a full -2 worse than the rating achieved in Table 1. Similarly, the total delta for the mushrooms is a much larger and worse negative number for the mushrooms in Table 2 than in Table 1.

By the same type of analysis, Table 3 shows that the worst mushrooms of all, especially in the stem growth and veils categories, are mushrooms packaged "open," that is, without any permeable cellophane or microporous uniaxial films to regulate the internal gas composition. This atmosphere is not substantially different from ambient conditions.

EXAMPLE 3

The same procedure was followed as for Example 2 except for minor modifications such as sample sizes and number of days evaluated as will be apparent from the data in the following Tables 4 and 5. These experiments demonstrate superior packaging of mushrooms using dual membranes of uniaxially oriented CAP film and cellophane under conditions of temperature abuse.

## TABLE 4

SERIES #4: DUAL MEMBRANE CAP FILM SYSTEM AT ABUSE TEMPERATURE

Components:
(1) $6.4 cm^2$(1 $in^2$) uniaxial PP/44% $CaCO_3$ CAP film[b]

$O_2$ permeance = 2464500cc/$m^2$-atm-day(159,000 cc/100$in^2$-atm-day) (PDF method)

(2) $12.9cm^2$(2 $in^2$) cellophane, Flexel 150 PUT-76

Water vapour transmission rate = 170g/$m^2$-day(11g/100 $in^2$-day) @ 10°C @ 50% RH driving force

Experimental program: 10 days storage at 4°C, 4 days storage at 13°C
Mushroom variety: U3 mushrooms from Phillips Mushroom Farms of Kennett Square, Pa.

|  | INITIAL | A | B | C | D | E |  |
|---|---|---|---|---|---|---|---|
| Elapsed time, days | 0.00 | 2.96 | 6.80 | 8.78 | 11.96 | 13.76 |  |
| Temperature °C | 4-10 | 4 | 4 | 4 | 13 | 13 |  |
| Initial weight, grams | N/A | 199.3 | 207.7 | 204.4 | 209.7 | 200.7 |  |
| Final weight, grams | N/A | 195.9 | 201.1 | 197.2 | 201.5 | 191.0 |  |
| % Weight Loss | N/A | 1.71 | 3.18 | 3.52 | 3.91 | 4.83 |  |
| $CO_2$% | 0.0 | 11.7 | 13.6 | 10.5 | 23.0 | 23.5 |  |
| $O_2$% | 20.9 | 9.3 | 9.7 | 12.0 | 1.2 | 1.4 |  |
| Organoleptic scores: |  |  |  |  |  |  | DELTA |
| Whiteness | 4 | 2.8 | 2.7 | 2.7 | 2.5 | 2.5 | -1.5 |
| Dirt | 3.9 | 3.8 | 3.8 | 3.9 | 3.8 | 3.8 | -0.1 |
| Bruises | 3.8 | 3 | 3.3 | 3.7 | 3.8 | 3.5 | -0.3 |
| Veils | 4.5 | 4.4 | 4.1 | 4.2 | 4.2 | 4.2 | -0.3 |
| Stem Appearance | 4 | 3.3 | 2.8 | 3 | 2.3 | 2.2 | -1.8 |
| Stem Growth | 5 | 5 | 3.9 | 4.2 | 3 · | 4 | -1 |
| Internal Color | 4.3 | 4.3 | 4 | 4.5 | 3.2 | 2.8 | -1.5 |
| Moisture | 5 | 4.5 | 4.1 | 4.4 | 4.8 | 3.9 | -1.1 |
| Overall Appearance | 3.9 | 3 | 2.9 | 3 | 2.8 | 2.6 | -1.3 |
| TOTAL | 38.4 | 34.1 | 31.6 | 33.6 | 30.4 | 29.5 | -8.9 |

b - Same formulation for Example 2 except that the uniaxial orientation
processing used forward draw of 7X with a forward draw roll setting temperature of 115°C.

EP 0 335 682 B1

## TABLE 5

SERIES #5:   OPEN CONTROL AT ABUSE TEMPERATURE

Components: Package is open to free flow of atmospheric gases.
(1) NO Uniaxial film
(2) NO cellophane

Experimental program:  10 days storage at 4°C, 4 days storage at 13°C
Mushroom variety:  U3 Mushrooms from Phillips Mushroom Farms of Kennett Square, Pa.

| | INITIAL | A | B | C | D | E | DELTA |
|---|---|---|---|---|---|---|---|
| Elapsed time, days | 0.00 | 2.96 | 6.80 | 8.78 | 11.96 | 13.76 | |
| Temperature °C | 4-10 | 4 | 4 | 4 | 13 | 13 | |
| Initial weight, grams | N/A | 205.9 | 208.7 | 195.0 | 203.5 | 205.8 | |
| Final weight, grams | N/A | 200.2 | 205.8 | 179.9 | 186.7 | 187.6 | |
| % Weight Loss | N/A | 2.77 | 1.39 | 7.74 | 8.26 | 8.84 | |
| $CO_2$% | 0.0 | 0.0 | 0.0 | 0.0 | 0.0 | 0.0 | |
| $O_2$% | 20.9 | 20.9 | 20.9 | 20.9 | 20.9 | 20.9 | |
| Organoleptic scores: | | | | | | | |
| Whiteness | 4 | 3 | 2.8 | 3.3 | 2.9 | 2.8 | -1.2 |
| Dirt | 3.9 | 3.9 | 4 | 3.9 | 3.8 | 3.8 | -0.1 |
| Bruises | 3.8 | 3 | 3 | 2.7 | 2.7 | 2.5 | -1.3 |
| Veils | 4.5 | 4 | 2.2 | 3.7 | 3.2 | 2.5 | -2 |
| Stem Appearance | 4 | 2.8 | 2.3 | 2 | 1.6 | 1.8 | -2.2 |
| Stem Growth | 5 | 5 | 1.3 | 2 | 1.2 | 1.5 | -3.5 |
| Internal Color | 4.3 | 3.75 | 3 | 2.3 | 2 | 2 | -2.3 |
| Moisture | 5 | 4.2 | 3.5 | 3.8 | 2.9 | 3 | -2 |
| Overall Appearance | 3.9 | 3.1 | 3 | 2.8 | 2.7 | 2.5 | -1.4 |
| TOTAL | 38.4 | 32.75 | 25.1 | 26.5 | 23.0 | 22.4 | -16 |

In this case, temperature abuse was defined to be four days storage at 13°C following ten days at 4°C. Table 4 shows that mushrooms packaged with dual membranes have superior organoleptic ratings under temperature abuse conditions compared to the mushrooms packaged in "open" conditions in Table 5. The mushrooms of Table 4, using the dual membrane, did far better on stem growth (delta of -1 compared to delta of -3.5) and far better on the total delta rating (-8.9 compared to -16).

**Claims**

1. A container for the storage in a controlled atmosphere of fresh produce that is constructed of substantially gas-impermeable walls that have a microporous gas-permeable panel that permits controlled flows of $CO_2$ and $O_2$ into and out of the container to enhance retention of freshness of the produce, characterised in that the gas-permeable panel is of a microporous oriented film of polypropylene or of a blend of a propylene homopolymer and a propylene-ethylene copolymer having an ethylene moiety concentration of 2-5% by weight, the gas-permeable panel having an oxygen and carbon dioxide permeance between 77,500 and 155,000,000 $cc/m^2$-day-atmosphere, the permeance and area of the film being such as to provide a flux of $O_2$ and $CO_2$ approximately equal to the predicted $O_2$ and $CO_2$ respiration rates for not more than 3.0 kg of enclosed produce, and having an $O_2$ to $CO_2$ permeance ratio of approximately 1, and the walls of the container also have a panel composed of cellophane that is permeable to moisture and substantially impermeable to the flow of $O_2$ and $CO_2$.

2. A container as claimed in claim 1, further characterized in that the cellophane panel has a water-vapor permeance of from about 31 tp 465 $gm/m^2$-day, when subjected to a driving force of about 100% relative humidity on one side of the film and about 50% relative humidity on the opposition side, and measured at 10°C.

3. A container as claimed in claim 1 or 2, further characterized in that the gas-permeable panel and cellophane panel are in one wall in partially-overlapping relationship.

4. A container as claimed in claim 1 or 2, further characterized in that the gas-permeable panel and cellophane panel are in one wall in side by side location.

5. A container as claimed in any of the preceding claims, further characterized in that the total area of each of the panels is between about 6.54 and 64.5 $cm^2$.

6. A container as claimed in any of the preceding claims, further characterized in that the total area of each of the panels is between about 6.54 and 387 $cm^2$.

7. A container as claimed in any of the preceding claims, further characterized in that the gas-permeable panel or the cellophane panel constitutes the lid wall of the container.

8. A container as claimed in any of any of the preceding claims, further characterized in that the gas-permeable panel and the cellophane panel together constitute the lid wall.

9. A container as claimed in claim 8, further characterized in that the gas-permeable panel constitutes the major part of the lid wall and the cellophane panel is substantially smaller and constitutes the remainder of the lid wall.

10. A container as claimed in claim 8 or 9, further characterized in that the part of the lid wall constituted by either the gas-permeable panel or the cellophane panel has an aperture that is closed by the other panel.

11. A container as claimed in any of the preceding claims, further characterized in that the total area of the lid wall of the container is between about 6.54 and 645 $cm^2$.

**Patentansprüche**

1. Behälter zur Lagerung von Frischprodukten in einer kontrollierten Atmosphäre, der aus im wesentlichen gasundurchlässigen Wänden aufgebaut ist, die ein mikroporöses, gasdurchlässiges Feld haben, das einen kontrollierten Fluß von $CO_2$ und $O_2$ in den und aus dem Behälter zuläßt zur verbesserten Erhaltung der Frische der Produkte, dadurch gekennzeichnet, daß das gasdurchlässige Feld aus einer mikroporösen ausgerichteten Folie aus Polypropylen oder aus einer Mischung eines Propylenhomopolymers und eines Propylenethylencopolymers mit einer Ethylenanteilkonzentration von 2-5 Gewicht-% besteht, wobei das gasdurchlässige Feld eine Sauerstoff- und Kohlendioxiddurchlässigkeit zwischen 77.500 und 155.000.000 cc/m$^2$-Tag-Atmosphäre aufweist, die Durchlässigkeit und Fläche der Folie dergestalt ist, daß ein $O_2$- und $CO_2$-Fluß erzeugt wird, der etwa gleich der vorhergesagten $O_2$- und $CO_2$-Respirationsrate ist bei nicht mehr als 3,0 kg eingeschlossener Produkte, und das Feld ein Durchlässigkeitsverhältnis von $O_2$ zu $CO_2$ von etwa 1 hat, und die Wände des Behälters auch ein Feld aufweisen, das aus Cellophan aufgebaut ist, das durchlässig für Feuchtigkeit und im wesentlichen undurchlässig für den Fluß von $O_2$ und $CO_2$ ist.

2.  Behälter gemäß Anspruch 1, weiterhin dadurch gekennzeichnet, daß das Cellophanfeld eine Wasserdampfdurchlässigkeit von etwa 31 bis 465 gm/m$^2$-Tag aufweist, wenn es einer Antriebskraft von etwa 100% relativer Feuchtigkeit auf der einen Seite der Folie und etwa 50% relativer Feuchtigkeit auf der gegenüberliegenden Seite ausgesetzt ist, gemessen bei 10°C.

3.  Behälter gemäß Anspruch 1 oder 2, weiterhin dadurch gekennzeichnet, daß das gasdurchlässige Feld und das Cellophanfeld in einer Wand zum Teil überlappend liegen.

4.  Behälter gemäß Anspruch 1 oder 2, weiterhin dadurch gekennzeichnet, daß das gasdurchlässige Feld und das Cellophanfeld in einer Wand nebeneinander angeordnet sind.

5.  Behälter gemäß einem der vorangehenden Ansprüche, weiterhin dadurch gekennzeichnet, daß die Gesamtfläche jedes Feldes zwischen etwa 6,54 und 64,5 cm$^2$ beträgt.

6.  Behälter gemäß einem der vorangehenden Ansprüche, weiterhin dadurch gekennzeichnet, daß die Gesamtfläche jedes Feldes zwischen etwa 6,54 und 387 cm$^2$ beträgt.

7.  Behälter gemäß einem der vorangehenden Ansprüche, weiterhin dadurch gekennzeichnet, daß das gasdurchlässige Feld oder das Cellophanfeld die Deckelwand des Behälters bildet.

8.  Behälter gemäß einem der vorangehenden Ansprüche, weiterhin dadurch gekennzeichnet, daß das gasdurchlässige Feld und das Cellophanfeld zusammen die Deckelwand bilden.

9.  Behälter gemäß Anspruch 8, weiterhin dadurch gekennzeichnet, daß das gasdurchlässige Feld den Hauptteil der Deckelwand bildet und das Cellophanfeld wesentlich kleiner ist und den Rest der Deckelwand bildet.

10. Behälter gemäß Anspruch 8 oder 9, weiterhin dadurch gekennzeichnet, daß der Teil der Deckelwand, der entweder von dem gasdurchlässigen Feld oder von dem Cellophanfeld gebildet wird, eine Öffnung hat, die von dem anderen Feld geschlossen wird.

11. Behälter gemäß einem der vorangehenden Ansprüche, weiterhin dadurch gekennzeichnet, daß die Gesamtfläche der Deckelwand des Behälters zwischen etwa 6,54 und 645 cm$^2$ beträgt.

**Revendications**

1.  Conteneur pour le stockge de produits frais dans une atmosphere controlee, construit avec des parois pratiquement impermeables aux gaz, comportant un panneau microporeux permeable aux gaz qui permet des passages controles de $CO_2$ et de $O_2$ vers le conteneur et a partir de celui-ci afin de favoriser le maintien de la fraîcheur des produits, caracterise en ce que le panneau permeable aux gaz est en un film oriente microporeux de polypropylene ou d'un melange d'un homopolymere de propylène et d'un copolymere propylene/ethylene ayant une concentration de motifs ethylene de 2 à 5% en poids, le panneau permeable aux gaz ayant une permeance à l'oxygene et au gaz carbonique comprise entre 77 500 et 155 000 000 cm$^3$/m$^2$-jour-atmospohere, la permeance et la surface du film etant telles qu'il en resulte un ecoulement de $O_2$ et de $CO_2$ approximativement egal aux taux respiratoires de $O_2$ et de $CO_2$ predits pour une quantite des produits enfermes ne depassant pas 3,0 kg, et ayant un rapport des permeances a $O_2$ et a $CO_2$ de 1 environ, et en ce que les parois du conteneur comportent egalement un panneau forme de cellophane qui est permeable a l'humidité et pratiquement impermeable au passage de $O_2$ et de $CO_2$.

2. Conteneur selon la revendication 1, caracterise en outre en ce que le panneau de cellophane a une permeance a la vapeur d'eau d'environ 31 a 465 g/m²-jour, mesuree a 10°C, lorsqu'il est soumis a une force agissante d'environ 100% d'humidite relative d'un cote du film et d'environ 50% d'humidite relative du cote oppose.

3. Conteneur selon la revendication 1 ou 2, caracterise en outre en ce que le panneau permeable aux gaz et le panneau de cellophane sont en rapport de recouvrement partiel sur une paroi.

4. Conteneur selon la revendication 1 ou 2, caracterise en outre en ce que le panneau permeable aux gaz et le panneau de cellophane sont situes cote a cote sur une paroi.

5. Conteneur selon l'une quelconque des revendications 1 à 4, caracterise en outre en ce que la surface totale de chacun des panneaux est comprise entre 6,54 et 64,5 cm².

6. Conteneur selon l'une quelconque des revendications 1 à 5, caracterise en outre en ce que la surface totale de chacun des pannenux est comprise entre 6,54 et 387 cm².

7. Conteneur selon l'une quelconque des revendications 1 a 6, caracterise en outre en ce que le panneau permeable aux gaz ou le panneau de cellophane constitue la paroi de couvercle du conteneur.

8. Conteneur selon l'une quelconque des revendications 1 a 7, caracterise en outre en ce que le panneau permeable aux gaz et le panneau de cellophane constituent ensemble la paroi de couvercle.

9. Conteneur selon la revendication 8, caracterise en outre en ce que le panneau permeable aux gaz constitue la majeure partie de la paroi de couvercle et le panneau de cellophane est nettepent plus petit et constitue le reste de la paroi de couvercle.

10. Conteneur selon la revendication 8 ou 9, caracterise en outre en ce que la partie de la paroi de couvercle qui est constituee, soit par le panneau permeable aux gaz, soit par le panneau de cellophane comporte une ouverture qui est fermee par l'autre panneau.

11. Conteneur selon l'une quelconque des revendications 1 a 10, caracterise en outre en ce que la surface totale de la paroi de couvercle du conteneur est comprise entre environ 6,54 et 645 cm².